# EUROPEAN PATENT SPECIFICATION

(11) **EP 4 207 441 B1**
(45) Date of publication and mention of the grant of the patent: **22.04.2026**
(21) Application number: 22856039.7
(22) Date of filing: 15.07.2022
(51) Int. Cl.: H01M 50/105, H01M 50/317, H01M 50/124, H01M 50/184, H01M 50/119, H01M 50/121, H01M 50/129, H01M 50/178, H01M 50/183, H01M 50/186, H01M 50/193, H01M 50/548, H01M 50/55, H01M 50/557, H01M 50/553

(54) **POUCH-TYPE SECONDARY BATTERY COMPRISING A POUCH BAG**
BEUTELARTIGE SEKUNDÄRBATTERIE MIT EINEM BEUTELBEUTEL
BATTERIE SECONDAIRE DE TYPE POCHETTE COMPRENANT UN SAC POCHETTE

(30) Priority: 13.08.2021 KR 20210107274
(43) Date of publication of application: 05.07.2023
(73) Proprietor: LG Energy Solution, Ltd., Seoul 07335 (KR)
(72) Inventor: PARK, Yoonwoo, Daejeon 34122 (KR); HWANG, Jin Ha, Daejeon 34122 (KR); JANG, Hyeon Woo, Daejeon 34122 (KR)
(74) Representative: Plasseraud IP
(86) International application number: PCT/KR2022/010361
(87) International publication number: WO 2023/018038

(56) References cited:
- WO-A1-2020/101353
- JP-A- 2006 185 713
- KR-A- 20140 137 603
- KR-A- 20150 012 531
- KR-A- 20160 045 468
- KR-A- 20170 103 236
- KR-A- 20170 136 880
- KR-A- 20190 042 215
- KR-A- 20190 123 059
- KR-A- 20190 142 498
- KR-A- 20210 088 172

## Description

### [Technical Field]

The present invention relates to a pouch type secondary battery comprising a pouch bag.

### [Background Art]

The secondary battery is widely used as a power source for mobile devices such as cell phones, laptops, and camcorders. In particular, the use of the lithium secondary battery is rapidly increasing due to the advantages of high operating voltage and high energy density per unit weight.

These lithium secondary batteries mainly use lithiumbased oxide as a positive electrode active material and a carbon material as a negative electrode active material, and generally are classified into lithium-ion batteries, lithium ion polymer batteries and lithium polymer batteries depending on the type of electrolyte used, and are also classified into cylindrical, prismatic, and pouch type secondary batteries according to the shape of the battery. Typically, in terms of battery shape, there is a high demand for a prismatic secondary battery and a pouch type secondary battery with a thin thickness that can be applied to products such as mobile phones.

Among them, there is a lot of interest in a pouch type secondary battery which has no restrictions on shape and size and is easy to assemble through heat sealing, and particularly is suitable for the production of light-weight and thin-thick cells as it is easy to release gas or liquid when abnormal behavior occurs. In general, the pouch type secondary battery has a structure in which an electrode assembly is embedded in a pouch bag made of an aluminum laminate sheet. That is, the pouch type secondary battery is manufactured by forming an accommodating portion for mounting the electrode assembly on an aluminum laminate sheet, and heat-sealing a separate aluminum laminate sheet separated from the aluminum laminate sheet or an extended aluminum laminate sheet in a state where the electrode assembly is mounted on the accommodating portion.

In the method of manufacturing the pouch type secondary battery, an electrode assembly is mounted on the accommodating portion, and then, an electrolyte solution is injected, and the pouch bag is sealed. Afterwards, an additional degassing process is performed to remove the gas contained in the electrolyte solution. After that, a process of cutting unnecessary aluminum laminate sheet is performed to manufacture a pouch type secondary battery. An aluminum laminate sheet should be made large in size to prepare for gas generation and a large amount of the sheet is discarded after the degassing process.

Therefore, in consideration of economic feasibility, etc., there is a need for a pouch bag that can be manufactured without the sheet being discarded after the degassing process.

### [Prior Art Document]

### [Patent Document]

Korean Patent Publication No. 10-2013-0134242

The document KR 2017 0136880 A,which shows the preamble of claim 1, provides an example of pouch for a lithium secondary battery, and more particularly, to a pouch for a lithium secondary battery for receiving an electrode assembly inside.

The document KR 2021 0088172 A provides an example of pouch-type secondary battery including a detachable sealing member to seal the pouch-type secondary battery, but to allow repeated gas discharge and additional injection of electrolyte for secondary batteries.

The document KR 2015 0012531 A provides an example of lithium secondary battery a lithium secondary battery including an opening and closing part.

The document KR 2014 0137603 A provides an example of pouch type packaging material including two thin films containing a high melting point polymer resin in a part of a sealing portion.

The document WO 2020/101353 A1 provides an example of a pouch case and a pouch-type secondary battery manufacturing method comprising the same to improve the bonding strength of the sealing portion to increase the sealing reliability.

The document JP 2006 185713 A discloses a battery.

### [Disclosure]

### [Technical Problem]

It is an object of the present invention to provide a pouch bag that can be opened and closed, wherein the pouch bag can be opened to remove the gas, and then, the pouch bag can be closed, in the degassing process of removing gas during the manufacturing process of the pouch type secondary battery.

### [Technical Solution]

According to the invention, a pouch type secondary battery according to claim 1 is provided.

In one embodiment, the protrusion may be formed in multiple numbers on a straight line on the surface of the inner resin layer of the one pouch film, and
the groove may be formed in multiple numbers on a straight line on the surface of the inner resin layer of the other pouch film.

In one embodiment, the protrusion may be formed in a continuous line on a straight line on the surface of the inner resin layer of the one pouch film, and the groove may be formed in a continuous line on a straight line on the surface of the inner resin layer of the other pouch film.

### [Advantageous Effects]

The pouch type secondary battery of the present invention comprises a pouch bag that can be opened and closed, so that when the pouch type secondary battery is manufactured, the pouch bag can be opened to remove gas and then the pouch bag can be closed. Therefore, the pouch bag of the present invention has an advantage of very excellent economic efficiency because there is no pouch bag to be discarded after the gas removal process.

### [Description of Drawings]

FIG. 1 is a diagram schematically showing the shape of a pouch type secondary battery before removal of a surplus portion during the manufacturing process of a conventional pouch type secondary battery.
FIGs. 2 to 6 are views schematically showing a degassing process during the manufacturing process of a conventional pouch type secondary battery.
FIG. 7 is a perspective view showing an opened state of the pouch bag of the present invention.
FIG. 8 is a perspective view showing a closed state of the pouch bag of the present invention.
FIG. 9 is a view showing the opened state of the opening and closing portion of the pouch bag as one embodiment of the present invention.
FIG. 10 is a cross-sectional view showing an opened state of the opening and closing portion of the pouch bag as one embodiment of the present invention.
FIG. 11 is a cross-sectional view showing the closed state of the opening and closing portion of the pouch bag as one embodiment of the present invention.

### [Best Mode]

Hereinafter, the present invention will be described in detail based on the accompanying drawings so that those of ordinary skill in the art can easily carry out the present invention. However, the present invention may be embodied in various different forms and is not limited to the embodiments described herein.

In order to clearly explain the present invention, parts irrelevant to the description are omitted, and the same reference numerals are assigned to the same or similar elements throughout the specification.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

Hereinafter, an embodiment will be described in detail with reference to the accompanying drawings. However, the present invention may be embodied in various different forms, and is not limited to the embodiments described herein.

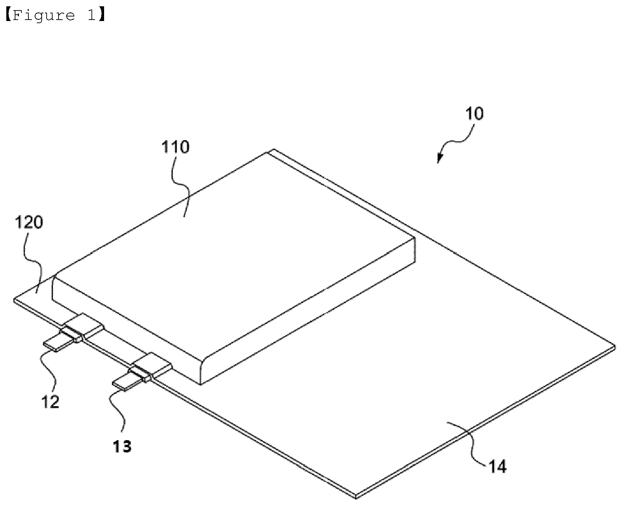

FIG. 1 is a view schematically showing the shape of a pouch type secondary battery before removal of a surplus portion during a manufacturing process of a conventional pouch type secondary battery and is a state in which an electrode assembly is accommodated in an electrode assembly accommodating portion 110.

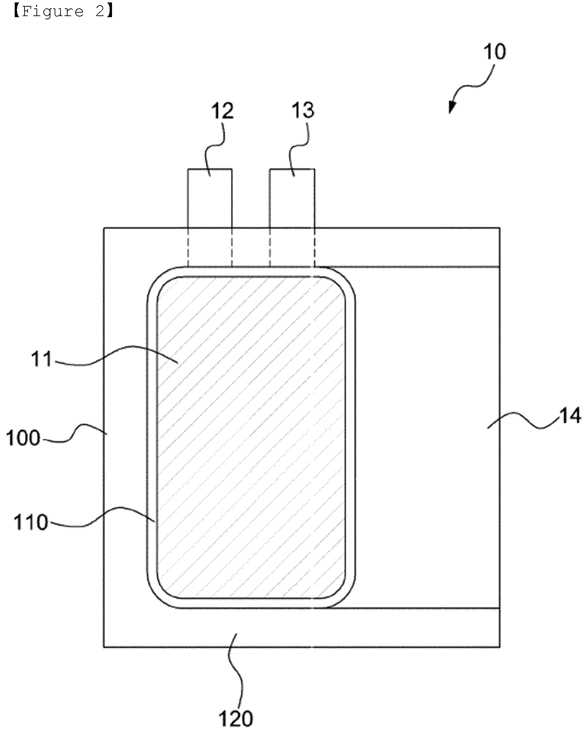

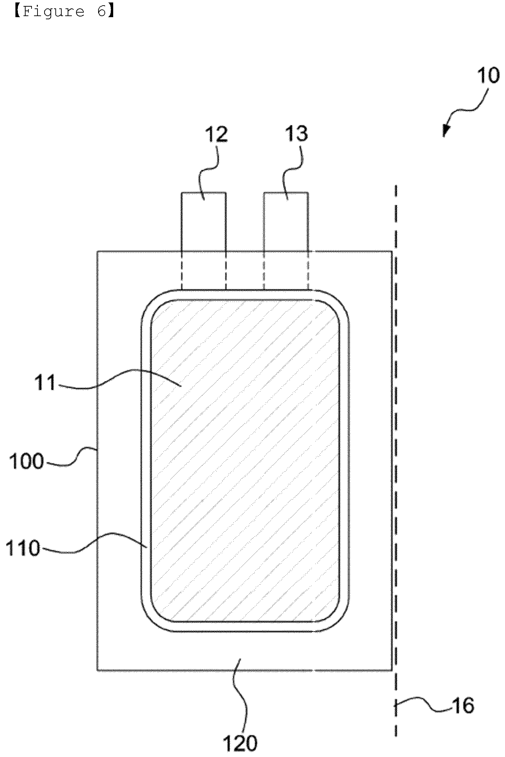

FIGs. 2 to 6 are views schematically showing a degassing process during the manufacturing process of a pouch type secondary battery using a conventional pouch bag.

The degassing process during the manufacturing process of the conventional pouch type secondary battery will be described as follows:
First, as shown in FIG. 2, the electrode assembly 11 is mounted on the electrode assembly accommodating portion 110 of a pouch bag 100, and a sealing portion 120, which is a portion of the outer circumferential surface surrounding the electrode assembly 11 except for a surplus portion 14, is heat-fused and sealed. Since the surplus portion 14 is not sealed, an electrolyte solution is injected through the surplus portion 14.

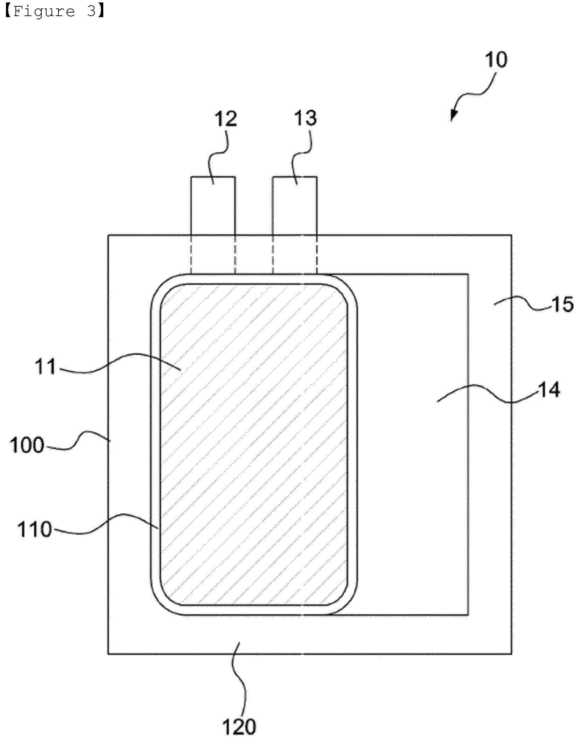

Next, as shown in FIG. 3, a formation process is proceeded by heat-fusing the end 15 of the edge of one side of the surplus portion 14 and performing charging and discharging to activate the pouch type secondary battery 10. The formation process is performed for the purpose of suppressing the decomposition reaction of the electrolyte solution in the completed secondary battery by forming a protective film by the electrolyte solution on the surface of the electrode (especially, negative electrode). Gas is generated inside the battery during the formation process, and the generated gas and excess electrolyte solution are collected and trapped in the surplus portion 14.

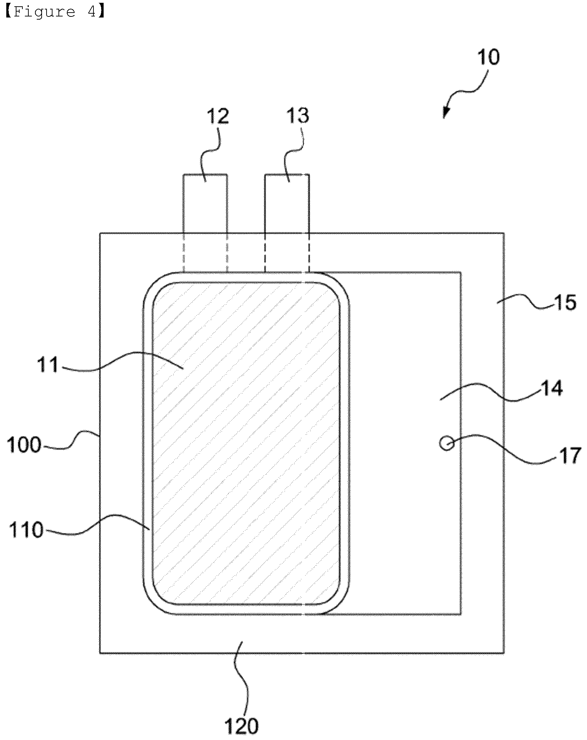

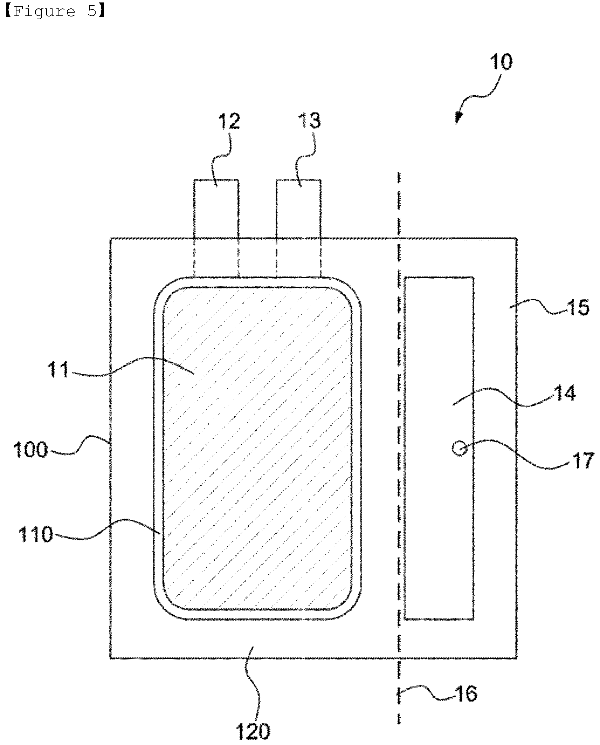

After that, as shown in FIG.4, a through-hole 17 is formed in the surplus portion 14 to perform a degassing process for discharging gas through the through-hole 17. After the degassing process, as in FIG. 5, the outer peripheral surface between a cutting portion 16 and the electrode assembly 11 based on the cutting portion 16 is sealed, and the surplus portion 14 is removed by cutting along the cutting portion 16.

The conventional pouch-type bag 100 requires the surplus portion 14 in which gas is trapped, and the surplus portion 14 is removed by cutting along the cutting portion 16 after the degassing process of removing the gas trapped in the surplus portion 14. Therefore, there is a problem that the pouch bag to be discarded occurs, which is not economical.

Accordingly, the present invention is to provide a pouch type secondary battery comprising a pouch bag capable of manufacturing a pouch type secondary battery without the pouch bag to be discarded.

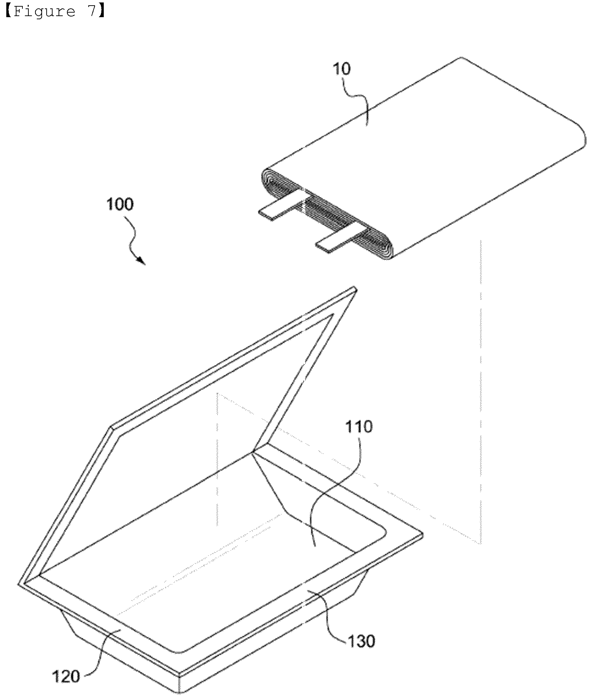

Hereinafter, the pouch bag for the secondary battery according to an embodiment will be described with reference to FIGs. 7 to 11.

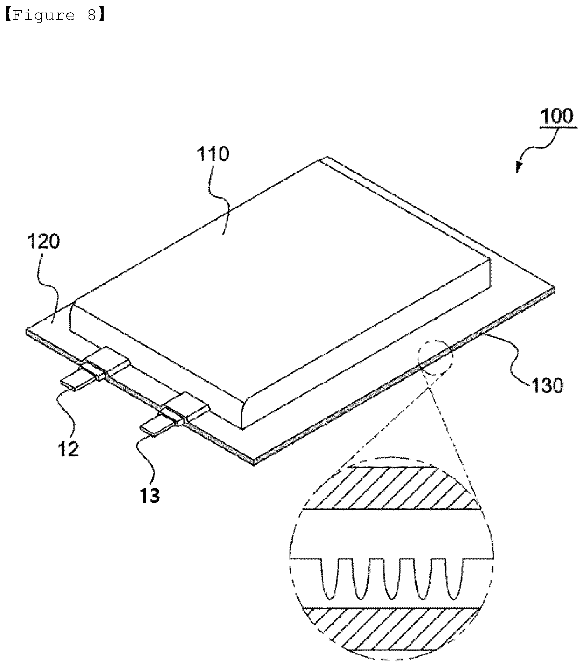

FIG. 7 shows an opened state of the pouch bag 100 for secondary batteries according to an embodiment of the present invention, and FIG. 8 shows a closed state of the pouch bag 100 for secondary batteries according to an embodiment of the present invention. FIG. 8 shows a state in which the electrode assembly 10 is accommodated in the electrode assembly accommodating portion 110.

Referring to FIGs. 7 and 8, the pouch bag 100 for the secondary battery according to an embodiment of the present invention comprises the electrode assembly accommodating portion 110 and the sealing portion 120, and the sealing portion 120 is provided with the opening and closing portion 130 that can be repeatedly opened and closed.

The sealing portion 120 is positioned in the form of a ring around the electrode assembly accommodating portion 110, and the opening and closing portion 130 is formed only on the left side or only on the right side of the sealing portion based on the axis on which the electrode terminal is located when the electrode assembly is accommodated. Specifically, the sealing portion 120 may be positioned in the form of a quadrangular ring around the electrode assembly accommodating portion 110.

The pouch bag 100 for the secondary battery is composed of a pouch film 200 comprising a metal layer 210 and an inner resin layer 220 formed on one surface of the metal layer 210.

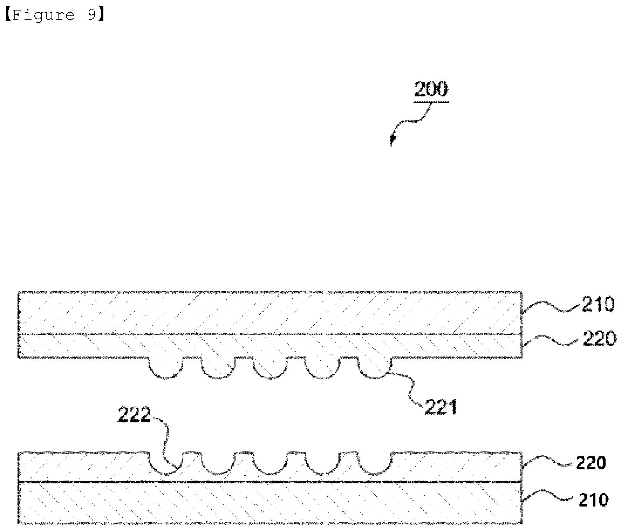

According to the present invention, the opening and closing portion 130 comprises a protrusion portion 221 provided on the inner resin layer 220 of any one of the two pouch films 200 sealed together, and the protrusion fixing portion 222 provided on the other inner resin layer, as shown in FIGs. 9 to 11.

The protrusion portion 221 has a protrusion protruding from the surface of the inner resin layer 220, and the protrusion fixing portion 222 has a groove recessed from the surface of the inner resin layer 220.

As shown in FIG. 9, the protrusion may be formed in multiple numbers on a straight line on the surface of the inner resin layer 220. In addition, the protrusion may have a separation distance from another adjacent protrusion. The recessed grooves may be formed in multiple numbers on a straight line on the surface of the inner resin layer 220. In this case, the protrusions and grooves may be formed in the same number and at a distance spaced apart from each other.

In addition, the protrusion protrudes from the surface of the inner resin layer 220 in the form of a spherical or polygonal column, and the groove is recessed from the surface of the inner resin layer 220 in the form of a spherical or polygonal column. In this case, the shape of the protrusion and the shape of the groove correspond to each other.

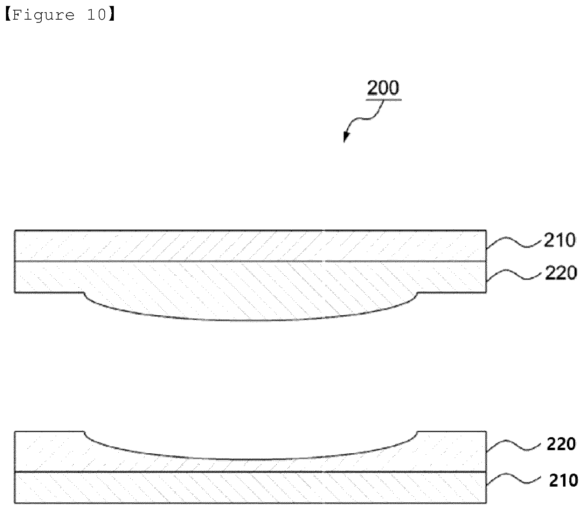

In addition, as shown in FIG. 10, the protrusion may be formed in a continuous line on a straight line on the surface of the inner resin layer 220, and the recessed grooves may be formed in a continuous line on a straight line on the surface of the inner resin layer 220. The protrusions and grooves have a cross-section in the longitudinal direction of a circular or polygonal shape.

According to the present invention, the opening and closing of the pouch bag 100 for the secondary battery of the present invention is performed by fitting and disengaging the protrusion portion 221 and the protrusion fixing portion 222.

FIGs. 9 and 10 are views showing the opened state of the opening and closing portion 130 of the pouch bag 100 for the secondary battery. That is, FIGs. 9 and 10 show the disengaged state of the protrusion portion 221 and the protrusion fixing portion 222, which is a state in which the protrusion of the protrusion portion 221 is not fitted into the recessed groove of the protrusion fixing portion 222.

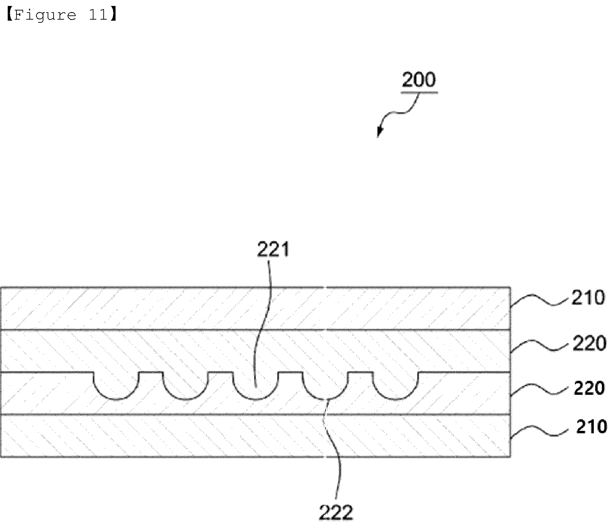

FIG. 11 shows the closed state of the opening and closing portion 130 of the pouch bag 100 for the secondary battery. That is, FIG. 11 shows a state in which the protrusion portion 221 and the protrusion fixing portion 222 are fitted. More specifically, as the protrusion of the protrusion portion 221 is fitted into the recessed groove of the protrusion fixing portion 222, the opening and closing portion 130 of the pouch bag 100 may be closed.

According to the present invention, as the pouch bag 100 of the present invention can be opened and closed by fitting and disengaging the protrusion portion 221 and the protrusion fixing portion 222, when manufacturing the pouch type secondary battery, a surplus portion in which gas is trapped is not required. Accordingly, the present invention does not require the step of removing the surplus portion by cutting the cutting portion, and the present invention may have an economical effect because the surplus portion to be removed does not occur, and thus a pouch-type secondary battery can be manufactured even without the pouch-type bag being discarded.

Specifically, in a state in which the protrusion portion 221 and the protrusion fixing portion 222 are disengaged, that is, in a state in which the pouch-type bag 100 is opened, the degassing process may be performed to discharge the gas. After the degassing process, the protrusion portion 221 and the protrusion fixing portion 222 are fitted, that is, the pouch-type bag 100 is in a closed state to finally manufacture a pouch type secondary battery.

Therefore, the pouch-type bag 100 according to the present invention can be opened and closed according to the fitting and disengaging of the protrusion portion 221 and the protrusion fixing portion 222, and thus does not need to include a separate surplus portion that is discarded after gas collection and thus is very economical because the pouch-type bag to be discarded does not occur.

In addition, the pouch type secondary battery according to the present invention comprises the pouch bag according to the present invention described above; an electrode assembly accommodated in the pouch bag; and an electrolyte solution charged in the pouch bag.

The electrode assembly and the electrolyte solution may be those known in the art.

It will be understood by those of ordinary skill in the art related to this embodiment that the present invention can be implemented in a modified form without departing from the essential characteristics of the above description. Therefore, the disclosed methods are to be considered in an illustrative sense rather than a limiting sense. The scope of the present invention is indicated in the claims.

### [Description of Symbol]

- 10:: Pouch type secondary battery
- 11:: Electrode assembly
- 12, 13:: Electrode terminal
- 14:: Surplus portion
- 15:: End of edge of surplus portion
- 16:: Cutting portion
- 17:: Through-hole
- 100:: Pouch-type bag
- 110:: Electrode assembly accommodating portion
- 120:: Sealing portion
- 130:: Opening and closing portion
- 200:: Pouch film
- 210:: Metal layer
- 220:: Inner resin layer
- 221:: Protrusion portion
- 222:: Protrusion fixing portion

## Claims

1. A pouch type secondary battery (10) comprising a pouch bag (100), an electrode assembly (11) accommodated in the pouch bag and an electrolyte solution charged in the pouch bag,
the pouch bag (100) comprising an electrode assembly accommodating portion (110) and a sealing portion (120), and having an opening and closing portion (130) that can be repeatedly opened and closed with respect to the sealing portion, wherein the pouch bag is composed of a pouch film (200) comprising a metal layer (210) and an inner resin layer (220) formed on one surface of the metal layer, and the opening and closing portion comprises a protrusion portion (221) provided on the inner resin layer (220) of one of two pouch films sealed together, and a protrusion fixing portion (222) provided on the inner resin layer of the other pouch film,
wherein the protrusion portion has a protrusion protruding from the surface of the inner resin layer of the one pouch film, and the protrusion fixing portion has a groove recessed from the surface of the inner resin layer of the other one of pouch film,
wherein the protrusion protrudes in the form of a spherical column or a polygonal column, and the groove is recessed in the form of a spherical or polygonal column, the protrusion and groove having a cross-section in the longitudinal direction of a circular or polygonal shape,
wherein the opening and closing portion is opened and closed by fitting and disengaging the protrusion portion and the protrusion fixing portion,
**characterized in that**
the sealing portion is positioned in the form of a ring around the electrode assembly accommodating portion, and the opening and closing portion is formed only on the left side or only on the right side of the sealing portion, based on the axis on which the electrode terminal is located.

2. The pouch type secondary battery (10) according to claim 1, wherein the protrusion is formed in multiple numbers on a straight line on the surface of the inner resin layer of the one pouch film, and the groove is formed in multiple numbers on a straight line on the surface of the inner resin layer of the other pouch film.

3. The pouch type secondary battery (10) according to claim 1, wherein the protrusion is formed in a continuous line on a straight line on the surface of the inner resin layer of the one pouch film, and the groove is formed in a continuous line on a straight line on the surface of the inner resin layer of the other pouch film.

## Patentansprüche

1. Sekundärbatterie (10) vom Beuteltyp, umfassend eine Beuteltasche (100), eine Elektrodenanordnung (11), welche in der Beuteltasche aufgenommen ist, und eine Elektrolytlösung, welche in der Beuteltasche geladen wird,
wobei die Beuteltasche (100) einen Elektrodenanordnung-Aufnahmeabschnitt (110) und einen Versiegelungsabschnitt (120) umfasst sowie einen Öffnungs- und Schließabschnitt (130) aufweist, welcher in Bezug auf den Versiegelungsabschnitt wiederholt geöffnet und geschlossen werden kann, wobei die Beuteltasche aus einer Beutelfolie (200) besteht, welche eine Metallschicht (210) und eine innere Harzschicht (220) umfasst, welche an einer Fläche der Metallschicht gebildet ist, und wobei der Öffnungs- und Schließabschnitt einen Vorsprungsabschnitt (221), welcher an der inneren Harzschicht (220) einer von zwei Beutelfolien bereitgestellt ist, welche miteinander versiegelt sind, und einen Vorsprung-Fixierabschnitt (222) umfasst, welcher an der inneren Harzschicht der anderen Beutelfolie bereitgestellt ist,
wobei der Vorsprungsabschnitt einen Vorsprung aufweist, welcher von der Fläche der inneren Harzschicht der einen Beutelfolie hervorsteht, und wobei der Vorsprung-Fixierabschnitt eine Nut aufweist, welche von der Fläche der inneren Harzschicht der anderen Beutelfolie vertieft ist,
wobei der Vorsprung in der Form einer sphärischen Säule oder einer polygonalen Säule hervorsteht, und wobei die Nut in der Form einer sphärischen oder polygonalen Säule vertieft ist, wobei der Vorsprung und die Nut in der longitudinalen Richtung einen Querschnitt mit kreisrunder oder polygonaler Form aufweisen,
wobei der Öffnungs- und Schließabschnitt durch Einpassen und Lösen des Vorsprungsabschnitts und des Vorsprung-Fixierabschnitts geöffnet und geschlossen wird,
**dadurch gekennzeichnet, dass** der Versiegelungsabschnitt in der Form eines Rings um den Elektrodenanordnung-Aufnahmeabschnitt positioniert ist, und wobei der Öffnungs- und Schließabschnitt auf Grundlage der Achse, an welcher der Elektrodenanschluss angeordnet ist, lediglich an der linken Seite oder lediglich an der rechten Seite des Versiegelungsabschnitts gebildet ist.

2. Sekundärbatterie (10) vom Beuteltyp nach Anspruch 1, wobei der Vorsprung in einer Mehrzahl an einer geraden Linie an der Fläche der inneren Harzschicht der einen Beutelfolie gebildet ist, und wobei die Nut in einer Mehrzahl an einer geraden Linie an der Fläche der inneren Harzschicht der anderen Beutelfolie gebildet ist.

3. Sekundärbatterie (10) vom Beuteltyp nach Anspruch 1, wobei der Vorsprung in einer kontinuierlichen Linie an einer geraden Linie an der Fläche der inneren Harzschicht der einen Beutelfolie gebildet ist, und wobei die Nut in einer kontinuierlichen Linie an einer geraden Linie an der Fläche der inneren Harzschicht der anderen Beutelfolie gebildet ist.

## Revendications

1. Batterie secondaire de type poche (10) comprenant un sac poche (100), un ensemble électrode (11) logé dans le sac poche et une solution électrolytique chargée dans le sac poche,
le sac poche (100) comprenant une partie de logement d'ensemble électrode (110) et une partie d'étanchéité (120), et présentant une partie d'ouverture et de fermeture (130) qui peut être ouverte et fermée de manière répétée par rapport à la partie d'étanchéité, dans laquelle le sac poche est composé d'un film de poche (200) comprenant une couche métallique (210) et une couche de résine interne (220) formée sur une surface de la couche métallique, et la partie d'ouverture et de fermeture comprend une partie saillie (221) prévue sur la couche de résine interne (220) d'un premier film de poche parmi deux films de poche scellés ensemble, et une partie de fixation de saillie (222) prévue sur la couche de résine interne de l'autre film de poche,
dans laquelle la partie en saillie présente une saillie faisant saillie à partir de la surface de la couche de résine interne du premier film de poche, et la partie de fixation de saillie présente une rainure évidée par rapport à la surface de la couche de résine interne de l'autre film de poche,
dans laquelle la saillie fait saillie sous la forme d'une colonne sphérique ou d'une colonne polygonale, et la rainure est évidée sous la forme d'une colonne sphérique ou polygonale, la saillie et la rainure présentant une section transversale dans la direction longitudinale d'une forme circulaire ou polygonale,
dans laquelle la partie d'ouverture et de fermeture est ouverte et fermée par mise en contact et désolidarisation de la partie en saillie et de la partie de fixation de saillie, **caractérisée en ce que**
la partie d'étanchéité est positionnée sous la forme d'un anneau autour de la partie de logement d'ensemble électrode, et la partie d'ouverture et de fermeture est formée uniquement sur le côté gauche ou uniquement sur le côté droit de la partie d'étanchéité, sur la base de l'axe sur lequel la borne d'électrode est située.

2. Batterie secondaire de type poche (10) selon la revendication 1, dans laquelle la saillie est formée en nombres multiples sur une ligne droite sur la surface de la couche de résine interne du premier film de poche, et la rainure est formée en nombres multiples sur une ligne droite sur la surface de la couche de résine interne de l'autre film de poche.

3. Batterie secondaire de type poche (10) selon la revendication 1, dans laquelle la saillie est formée en ligne continue sur une ligne droite sur la surface de la couche de résine interne du premier film de poche, et la rainure est formée en ligne continue sur une ligne droite sur la surface de la couche de résine interne de l'autre film de poche.
